# EUROPEAN PATENT SPECIFICATION

(11) **EP 0 430 564 B1**
(45) Date of publication and mention of the grant of the patent: **13.04.1994**
(21) Application number: 90312667.0
(22) Date of filing: 21.11.1990
(51) Int. Cl.: B65D 59/06

(54) **Protective cover for end yoke**
Schutzkappe für Gabelkopf
Couvercle protecteur pour chape

(30) Priority: 27.11.1989 US 441170
(43) Date of publication of application: 05.06.1991
(73) Proprietor: DANA CORPORATION, Toledo, OH 43615 (US)
(72) Inventor: Ellis, John A., Pottstown, PA 19464 (US)
(74) Representative: Cheyne, John Robert Alexander Mackenzie

(56) References cited:
- DE-U- 7 912 106

## Description

This invention relates in general to protective devices and in particular to a protective cover which is releasably securable to an end yoke.

In the vehicle manufacturing industry, it is common for components to be manufactured in one location, then transported to another location for assembly with other components. One component which is often transported between manufacturing and assembly locations is an end yoke. The end yoke has a splined bore formed through a hub portion which permits it to be mounted on a splined shaft for rotation therewith. Typically, the end yoke is mounted on the output shaft of a vehicle transmission. The end yoke further has a pair of spaced apart arms which form a portion of a universal joint. The universal joint provides a variable angular driving connection between the output shaft and a drive shaft. The outer surface of the hub portion of the end yoke is usually formed having a precisely ground outer surface for engagement by a seal.

It is well known that components of this type are not handled carefully during transportation between the manufacturing and assembly locations. As a result, an end yoke frequently receives impacts during such transportation. Consequently, the precisely ground outer surface of the end yoke must be protectively covered in order to prevent damage thereto. Many devices are known in the art for protectively covering components such as this, but several drawbacks to these devices have been noted. Some of these known devices are difficult to install and remove, thereby decreasing their efficiency of use. Others are more easily installed and removed, but have been prone to accidental removal during shipment. Lastly, many of such devices are relatively expensive to manufacture and difficult to use. Thus, it would be desirable to provide a protective cover for a component such as an end yoke which is simple and inexpensive in construction and operation, yet which is reliable.

DE-A-7912106 describes a protective cover having a plurality of legs depending from a cover portion. The legs are spaced apart and form an annular sleeve which is inserted into an opening to be covered. In use, the legs extend completely through the opening. Outwardly projecting cone-shaped bosses are formed on each of the leg. The legs are formed from resilient material and are forced inwardly as the bosses pass through the opening. When the legs are inserted completely through the opening, they spring apart, causing the projectings to retain the cover in the opening.

According to the present invention there is provided a protective cover adapted to be secured to a hollow component having an outer surface and an opening formed therein which terminates in an end surface the protective cover comprising:
an end portion defining an outer periphery;
a skirt portion depending from the outer periphery of the end portion;
a pair of legs connected to the end portion and extending therefrom within the skirt portion the legs being spaced apart from the skirt portion so as to define an annular space therebetween, the legs being adapted to extend into the opening of the component;
shoulder means formed on at least one of the legs for releasably engaging the end surface of the component to secure the protective cover thereto, the outer surface of the component being received within the annular space defined between the skirt portion and the pair of legs so as to be protectively covered by the skirt portion characterized in that a depending tab is formed on the outer end of at least one of the legs for facilitating the removal of the protective cover from the component the depending tab having an outwardly facing surface which, when the protective cover is secured to the component, is substantially perpendicular to the end surface.

A cover according to the invention is installed by slightly compressing the legs together and inserting them through an aperture at one end of the component. When the ends of the legs are moved beyond the opposite end of the component, the legs spring apart such that the shoulders engage the other end to retain the cover thereon.

For a better understanding of the present invention and to show how it may be carried into effect reference will now be made by way of example to the accompanying drawings, in which:

Fig. 1 is a sectional elevational view of a protective cover for an end yoke in accordance with this invention.

Fig. 2 is a sectional elevational view, partially broken away, taken along line 2-2 of Fig. 1.

Fig. 3 is a sectional elevational view of the protective cover illustrated in Fig. 1 mounted on a conventional end yoke.

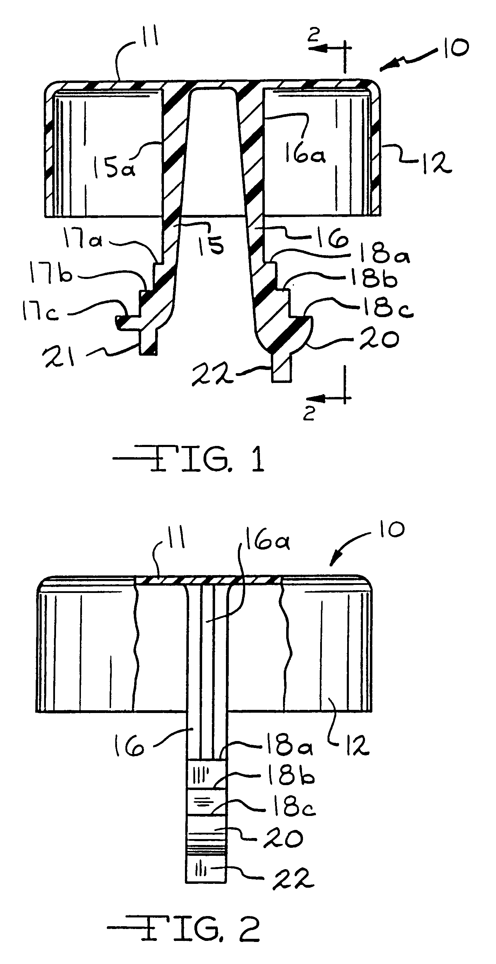

Referring now to the drawings, there is illustrated in Figs. 1 and 2 a protective cover, indicated generally at 10, in accordance with this invention. The cover 10 includes a generally flat circular end portion 11 having a depending skirt portion 12 formed about the outer periphery thereof. The skirt portion 12 is formed integrally with the end portion 11 and extends axially downwardly therefrom to define a hollow cylindrical protected region, as will be explained below.

First and second legs 15 and 16 are formed integrally with the end portion 11. The legs 15 and 16 are located on opposite sides of a central axis passing through the end portion 11 and are equidistantly spaced therefrom. From the end portion 11, the legs 15 and 16 extend downwardly within and beyond the skirt portion 12. As they extend downward, the legs 15 and 16 diverge slightly apart from one another in inverted-V fashion. Thus, the lower ends of the legs 15 and 16 are spaced apart greater than the upper ends. As best shown in Fig. 2, respective strengthening ribs 15a and 16a are formed throughout most of the length of the legs 15 and 16.

Near the lower end of the first leg 15, a series of shoulders 17a, 17b, and 17c are formed on an outwardly facing side thereof. A similar series of shoulders 18a, 18b, and 18c are formed on an outwardly facing side of the second leg 16 near the lower end thereof. The shoulders 17a, 17b, and 17c and the shoulders 18a, 18b, and 18c face in opposite directions. The shoulders 17a, 17b, and 17c define increasing axial distances from the end portion 11. The shoulders 18a, 18b, and 18c also define increasing axial distances from the end portion 11, which are equal to the respective axial distances defined by the shoulders 17a, 17b, and 17c. Because of the divergence of the legs 15 and 16, the transverse distance separating the first shoulders 17a and 18a is less than the transverse distance separating the second shoulders 17b and 18b. Likewise, the transverse distance separating the second shoulders 17b and 18b is less than the transverse distance separating the third shoulders 17c and 18c.

As best shown in Fig. 1, the second leg 16 is formed somewhat longer than the first leg 15. Below the third shoulder 18c on the second leg 16, a curved surface 20 is formed. The extended length of the second leg 16 and the curved surface 20 are provided to facilitate the installation of the cover 10, as will be described below. Axially extending tabs 21 and 22 are formed on the lower ends of the first and second legs 15 and 16, respectively. The tabs 21 and 22 are provided to facilitate the removal of the cover 10, as will also be described below.

The entire cover 10 is preferably formed from a relatively stiff, yet slightly flexible material. High density polyethylene has been found to function satisfactorily. However, it will be appreciated that other materials may be used to form the cover 10.

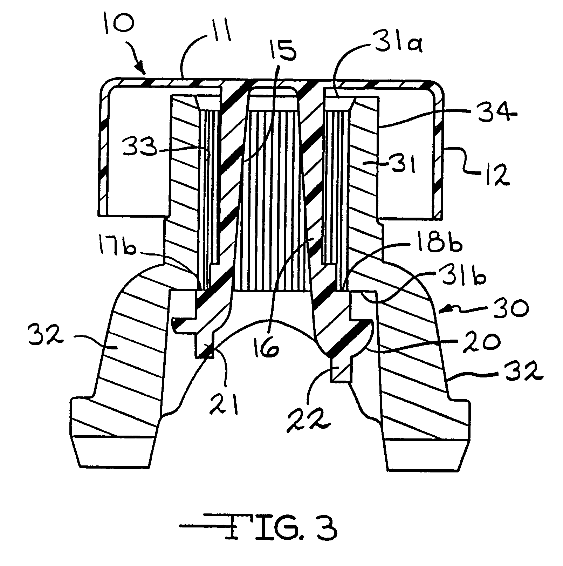

Fig. 3 illustrates the protective cover 10 mounted on an end yoke, illustrated generally at 30. The end yoke 30 is conventional in the art and includes a generally cylindrical hub portion 31 having a pair of space apart arms 32 extending therefrom. A splined bore 33 is formed through the hub portion 31 extending between two end surfaces 31a and 31b thereof. The splined bore 33 permits the end yoke 30 to be mounted on a male splined shaft (not shown) for rotation therewith. An outer cylindrical surface 34 of the hub 30 is precisely ground to a smooth finish. This precisely ground outer surface 34 is the portion of the end yoke 30 which must be protected from impacts during shipment.

To install the cover 10 on the end yoke 30, the legs 15 and 16 are generally aligned with the splined bore 33 adjacent to the first end 31a of the hub portion 31. The inner diameter of the splined bore 33 is slightly smaller than the distance separating the outer sides of the legs 15 and 16. Therefore, the two legs 15 and 16 must be slightly compressed together to permit them to be inserted within the splined bore 33. To facilitate this insertion, the cover 10 is first slightly angled relative to the end yoke 30. Then, the cover 10 is moved axially such that the longer second leg 16 initially enters the splined bore 33, followed by the first leg 15. By angling the cover 10 in this manner, and further by forming the second leg 16 slightly longer than the first leg 15, the legs 15 and 16 may be inserted within the splined bore 33 without exerting a large amount of force to compress them together. Consequently, the amount of force required to begin this installation process is significantly reduced.

As the cover 10 is further moved axially relative to the end yoke 30 in this angled orientation, the lower ends of the legs 15 and 16 slide along the splined bore 33. On the second leg 16, only a small portion of the curved surface 20 engages the splined bore 33. Thus, the surface are of engagement between the second leg 16 and the splined bore 33 is relatively small. As a result, the amount of friction which is generated in opposition to such axial movement is greatly reduced. Such axial movement continues until the lower ends of the second leg 16 is moved outwardly from the second end 31b of the hub 31. At that point, the second leg 16 snaps outwardly away from the first leg 15. Further axial movement causes the lower end of the first leg 15 to be moved outwardly from the second end 31b, where it also snaps outwardly away from the second leg 16. When this occurs, the shoulders 17 and 18 engage the end surface 31b of the hub 31. Therefore, the cover 10 is reliably secured to the end yoke 30. In this position, the skirt portion 12 extends over and protectively encloses the precisely ground cylindrical outer surface 34.

It will be appreciated that the cover 10 is easily adapted for use with differently sized end yokes 30. The axial length of the splined bore 33 will determine which of the shoulder pairs 17a, 18a or 17b, 18b, or 17c, 18c will engage the second end 31b of the hub 31. The axial movement of the cover 10 is continued until the appropriate pair of shoulders 17a, 18a or 17b, 18b or 17c, 18c automatically seats against the second end 31b of the hub 31. As mentioned above, the tabs 21 and 22 are provided to facilitate removal of the cover 10 from the hub 30.

To remove the cover 10, the tabs 21 and 22 are initially squeezed between the thumb and index finger of an operator. As a result, the legs 15 and 16 are compressed toward one another. This movement disengages the legs from the second end surface 31b of the hub 31, permitting the cover 10 to be moved axially in the opposite direction for removal.

## Claims

1. A protective cover (10) adapted to be secured to a hollow component (30) having an outer surface (34) and an opening (33) formed therein which terminates in an end surface (31b), the protective cover (10) comprising:
an end portion (11) defining an outer periphery;
a skirt portion (12) depending from the outer periphery of the end portion (11);
a pair of legs (15,16) connected to the end portion (11) and extending therefrom within the skirt portion (12), the legs (15,16) being spaced apart from the skirt portion (12) so as to define an annular space therebetween, the legs (15,16) being adapted to extend into the opening (33) of the component (30);
shoulder means (17,18) formed on at least one of the legs (15,16) for releasably engaging the end surface (31b) of the component (30) to secure the protective cover (10) thereto, the outer surface (34) of the component (30) being received within the annular space defined between the skirt portion (12) and the pair of legs (15,16) so as to be protectively covered by the skirt portion (12), characterized in that a depending tab (21,22) is formed on the outer end of at least one of the legs (15,16) for facilitating the removal of the protective cover (10) from the component (30), the depending tab (21,22) having an outwardly facing surface which, when the protective cover (10) is secured to the component (30), is substantially perpendicular to the end surface (31b).

2. A protective cover as claimed in claim 1, characterized in that the legs (15,16) diverge apart from one another as the legs (15,16) extend from the end portion.

3. A protective cover as claimed in claim 1 or 2, characterized in that the shoulder means includes first and second shoulders (17a,17b) formed on one of the legs (15,16), the first shoulder (17a) being located farther away from the end portion (11) than the second shoulder (17b).

4. A protective cover as claimed in claim 1 or 2, characterized in that the shoulder means includes first and second shoulders (17a,17b,18a,18b) formed on each of the legs, the first shoulders (17a,18a) being located farther away from the end portion (11) than the second shoulders (17b,18b).

5. A protective cover as claimed in any one of the preceding claims, characterized in that at least one of the legs (15,16) terminates in a rounded surface (20) to facilitate installation of the protective cover (10) on the component.

## Patentansprüche

1. Schutzdeckel (10), der auf einem hohlen Element (30) befestigbar ist, das eine äußere Oberfläche (34) und eine Öffnung (33) aufweist, und das in einer Stirnfläche (31b) endigt, wobei der Schutzdeckel (10) folgende Teile umfaßt:
Ein Endabschnitt (11), der einen Außenumfang definiert; ein Randabschnitt (12), der vom Außenumfang des Endabschnittes (11) ausgeht;
ein Paar Schenkel (15, 16), die mit dem Endabschnitt (11) verbunden sind und von diesem aus innerhalb des Randabschnittes (12) verlaufen, wobei ferner die Schenkel (15, 16) vom Randabschnitt (12) beabstandet sind, so daß sie einen ringförmigen Zwischenraum mit diesem bilden und die Schenkel (15, 16) sich in die Öffnung (33) des Elementes (30) hineinerstrecken können;
ferner mit Schultern (17, 18), die an wenigstens einem der Schenkel (15, 16) ausgebildet sind, für lösbaren Eingriff mit der Stirnfläche (31b) des Elementes (30), um den Schutzdeckel (10) an diesem zu halten, wobei die äußere Oberfläche (34) des Elementes (30) in dem ringförmigen Zwischenraum zwischen dem Randabschnitt (12) und dem Paar Schenkel (15, 16) aufgenommen ist, so daß sie schützend durch den Randabschnitt (12) abgedeckt ist, **dadurch gekennzeichnet,** daß eine abwärts gerichtete Nase (21, 22) am äußeren Ende von wenigstens einem der Schenkel (15, 16) ausgebildet ist, um die Abnahme des Schutzdeckels (10) von dem Element (30) zu erleichtern, daß ferner die Nase (21, 22) eine nach außen gerichtete Fläche hat, die, wenn der Schutzdeckel (10) an dem Element (30) befestigt ist, im wesentlichen senkrecht zur Stirnfläche (31b) verläuft.

2. Schutzdeckel nach Anspruch 1, **dadurch gekennzeichnet,** daß die Schenkel (15, 16) voneinander divergieren, wenn sie sich von dem Endabschnitt aus erstrecken.

3. Schutzdeckel nach Anspruch 1 oder 2, **dadurch gekennzeichnet,** daß die Schultern erste und zweite Schultern (17a, 17b) umfassen, die an einem der Schenkel (15, 16) ausgebildet ist, und daß die erste Schulter (17a) weiter weg vom Endabschnitt (11) liegt,als die zweite Schulter (17b).

4. Schutzdeckel nach Anspruch 1 oder 2, **dadurch gekennzeichnet,** daß die Schultern erste und zweite Schultern (17a, 17b, 18a, 18b) umfassen, die an jedem der Schenkel ausgebildet sind, und daß die ersten Schultern (17a, 18a) weiter weg vom Endabschnitt (11) liegen, als die zweiten Schultern (17b, 18b).

5. Schutzdeckel nach einem der vorhergehenden Ansprüche, **dadurch gekennzeichnet,** daß wenigstens einer der Schenkel (15, 16) in einer abgerundeten Oberfläche (20) endigt, um den Einbau des Schutzdeckels (10) auf das Element zu erleichtern.

## Revendications

1. Couvercle de protection (10) apte à être fixé sur un composant creux (30) ayant une surface externe (34) et une ouverture (33) ménagée dans celle-ci qui se termine par une surface d'extrémité (31b), le couvercle de protection (10) comprenant :
- une partie d'extrémité (11) définissant un pourtour extérieur,
- une partie formant jupe (12) suspendue à partir du pourtour extérieur de la partie d'extrémité (11),
- une paire de pieds (15, 16) reliés à la partie d'extrémité (11) et s'étendant à partir de celle-ci à l'intérieur de la partie formant jupe (12), les pieds (15, 16) étant espacés de la partie formant jupe (12) de manière à définir un espace annulaire entre eux, les pieds (15, 16) étant aptes à s'étendre à l'intérieur de l'ouverture (33) du composant (30),
- des moyens formant épaulement (17, 18) ménagés sur au moins l'un desdits pieds (15, 16) pour recevoir d'une manière amovible la surface d'extrémité (31b) du composant (30) et fixer le couvercle de protection (10) sur ce dernier, la surface externe (34) du composant (30) étant reçue à l'intérieur de l'espace annulaire défini entre la partie formant jupe (12) et la paire de pieds (15, 16) de manière à être couverte et protégée par la partie formant jupe (12), caractérisé en ce qu'une patte (21, 22) est ménagée en saillie de l'extrémité externe de l'un au moins desdits pieds (15, 16) pour faciliter le retrait du couvercle de protection (10) à partir du composant (30), la patte en saillie (21, 22) ayant une surface dirigée vers l'extérieur qui, lorsque le couvercle de protection (10) est fixé sur le composant (30), est sensiblement perpendiculaire à la surface d'extrémité (31b).

2. Couvercle de protection selon la revendication 1, caractérisé en ce que les pieds (15, 16) s'étendent à partir de la partie d'extrémité en divergeant l'un de l'autre.

3. Couvercle de protection selon la revendication 1 ou 2, caractérisé en ce que les moyens formant épaulement comportent des premier et second épaulements (17a, 17b) ménagés sur l'un des pieds (15, 16), le premier épaulement (17a) étant disposé à une distance de la partie d'extrémité (11) supérieure à celle du second épaulement (17b).

4. Couvercle de protection selon la revendication 1 ou 2, caractérisé en ce que les moyens formant épaulement comportent des premier et second épaulements (17a, 17b, 18a, 18b) ménagés sur chacun desdits pieds, les premiers épaulements (17a, 18a) étant disposés à une distance de la partie d'extrémité (11) supérieure à celle des seconds épaulements (17b, 18b).

5. Couvercle de protection selon une quelconque des revendications précédentes, caractérisé en ce que l'un au moins des pieds (15, 16) se termine par une surface incurvée (20) pour faciliter la mise en place du couvercle de protection (10) sur le composant.
